# EUROPEAN PATENT SPECIFICATION

(11) **EP 1 527 828 B1**
(45) Date of publication and mention of the grant of the patent: **12.12.2007**
(21) Application number: 03078386.4
(22) Date of filing: 29.10.2003
(51) Int. Cl.: B09B 3/00, B27K 5/00, B03B 9/06, C07C 37/86

(54) **Process for recycling used wooden railway cross-bars impregnated with contaminating material**
Verfahren zur Rückführung der Schmutzstoffe aus imprägnierten, gebrauchten Eisenbahnschwellen aus Holz
Procédé pour le recyclage des barres de traverse ferroviaire en bois usagées et impregnées de matériaux souillants

(43) Date of publication of application: 04.05.2005
(73) Proprietor: Railtech Limited, Road Town, Tortola (VG)
(72) Inventor: Foster, John, El Dorado Panama City (PA)
(74) Representative: Mittler, Enrico

(56) References cited:
- EP-A- 0 529 203
- WO-A-00/74909
- DE-A- 4 206 795
- DE-A- 4 223 029
- DE-A- 4 309 988
- DE-A- 19 804 266
- GB-A- 510 934
- US-A- 5 378 323
- US-A- 5 882 427

## Description

The present invention is concerned with a process for recycling used wood cross-bars impregnated with contaminating material for railways.

It is known that the wood cross-bars for railways must be periodically replaced due to the natural deterioration caused by atmospheric agents and by the strong stresses that they receive during the passage of trains at high speed.

Said wood cross-bars for railways consist of wooden materials divided, for purposes of working and use of particular nailings, into three species:
- strong: bay oak, British oak, bitter oak, ilex, eucalyptus;
- medium: beech, elm, ash;
- soft; pine, larch.

These cross-bars, before their use, are forwarded to "impregnation" centres, where by means of a system called "Rueping" or "double Rueping" creosote oil (or cresoline oil) is injected, which is considered noxious by the Italian law decree 406/98 for the presence of phenols, which are cancirogenic if higher than a given percent.

The cresoline oil, used in the past in the conservative treatment of wood cross-bars employed in railways, consists of a mixture of p-creosol, o-creosol and m-creosol, compounds belonging to the family of phenols characterized by Ka of the order of 10-10.

The use of cement cross-bars has made available a great amount of wood cross-bars, which must be decontaminated from cresoline oil in order to be reused. Otherwise, they must be sent directly to discharge.

WO-A-00/74909 and DE-A-19804266 disclose recycling process for contaminated wood as recited in the preamble of claim 1.

Object of the present invention is to provide a process which allows recycling of used wood cross-bars for railways, foreseeing a high reuse of the same cross-bars, possibly for uses different from the preceding use.

According to the invention such an object is reached with a process for recycling used wood cross-bars for railways, as defined in claim 1.

These and other features of the present invention will be made more evident by the following detailed description of an embodiment thereof which is illustrated by way of example in the enclosed drawings, in which:
Figure 1 shows a flow chart of the process according to the present invention;
Figure 2 shows a block diagram of an embodiment of the decontamination plant for wood cross-bars.

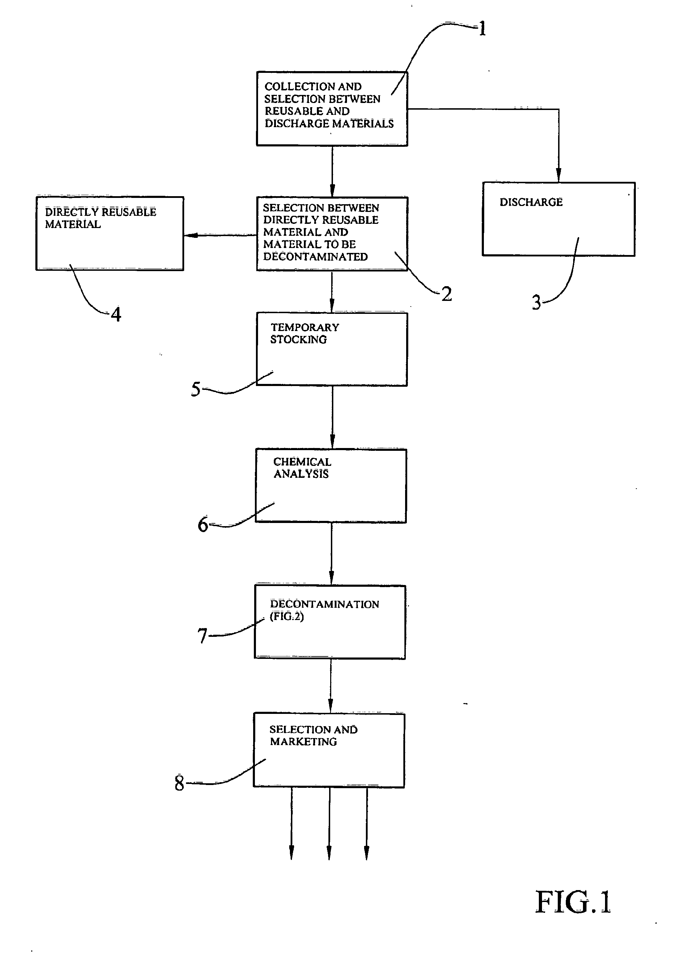

In said Figure 1 there is indicated by 1 a step of collection of the wood cross-bars in proper places where a selection is carried out between the reusable cross-bars, forwarded to a selection step 2, and those to be sent to discharge 3.

Some cross-bars not sent to discharge show themselves as still integral, that is not having cracks or visible damages. Said cross-bars can therefore be reused directly (step 4) for the revision of rails or the construction of railways in several industrial connections, being therefore considered as new.

Those cross-bars which for visible defects (cracks, breaks, mushroom etches, notable curvatures) are not suitable for reuse but could change their destination of use are temporarily stocked in suitable places (step 5).

A step 6 of detailed chemical analysis follows, which allows to define the subsequent decontamination treatment (step 7). The chemical analysis may be carried out either by samples or by incoming batches.

The decontamination process as used is based on the acid properties of phenols and consists of an extraction process with a watery solution of NaOH which may be schematised and described as follows.

By treating phenol with NaOH a deprotonization of the group OH occurs generating the phenate of sodium which, being a salt, has a higher solubility in water than the initial phenol. Then, by immerging the wood piece impregnated with cresoline oil into a watery solution of soda, a phenate is formed which passes from the wooden tissue to the watery solution. By carrying out a series of extraction processes with watery solutions of soda there is obtained the complete extraction of the cresoline oil from the wood cross-bars, which can thus be reused for several purposes.

The phenate containing watery extraction solution is recovered by means of an acidification process. From such a process a mixture of phenols with low solubility in the watery phase is obtained, which is separated by means of an extraction process with organic solvents such as ethylic ether or dichloromethane.

From the just described extraction process with organic solvents the watery phase is recovered, which is sent to a depuration plant for industrial water, while the organic phase, which contains the cresoline oil, is subjected to a vaporization process by which the organic solvent is recovered together with, as a residual, the cresoline oil to be sent in a second time to suitable treatment plants.

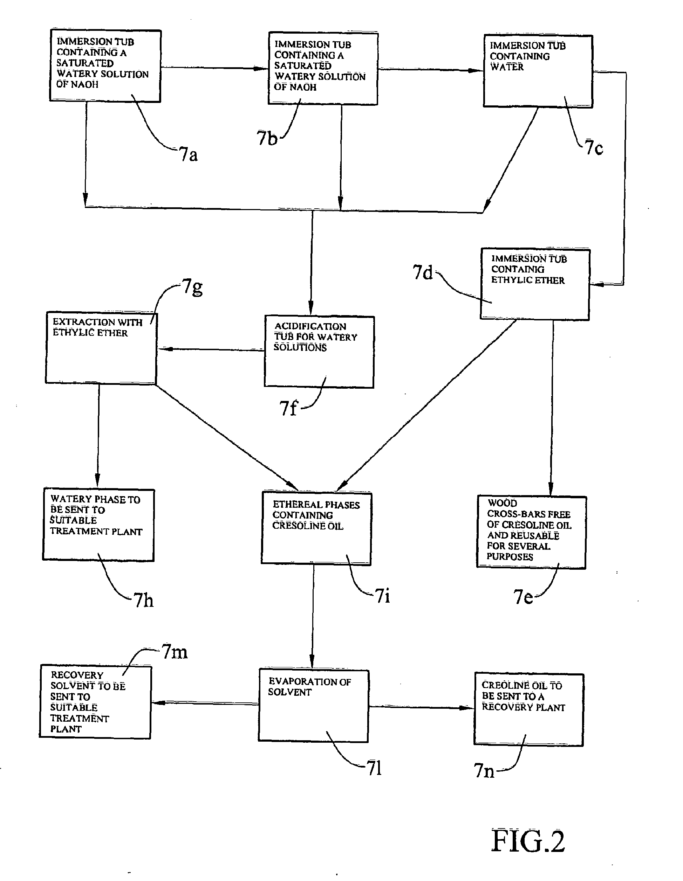

An experimental test of said decontamination process, divided into several phases according to the block diagram shown in Figure 2, was carried out in a laboratory (step 7 in Figure 1).

A saturated watery solution of NaOH (500 ml) is prepared, is cold at environmental temperature and is put in an extraction tub containing a piece of wood cross-bar of size 30cms x 30cms x 15cms and of a weight of 2.57 Kg (step 7a). The cross-bar is left in the bath (completely dipped) for 2.5 hours while keeping the solution of soda in agitation. Subsequently, the cross-bar is put in a second extraction tub once again containing 500 ml of saturated watery solution of NaOH and is left in the bath for further 5 hours according to the above described modes (step b). At the end of such a process the cross-bar is put in a third tub containing 500 ml of water and is left in the bath for further 2 hours (step 7c). The cross-bar is then put in a tub containing ethylic ether and is left in the bath for further 5 hours while maintaining the solvent in agitation (step 7d). At the end of the process the cross-bar is recovered (step 7e) and left drying at environment temperature for 48 hours and subsequently the final weighing is carried out, thereby noticing a weight of 2.38 Kg but above all a substantial absence of the characteristic smell of the cresoline oil.

The watery solutions of the first, second and third extractions are united in a flask of 2 litres and are acidified up to reach a pH of 4-5 with concentrated HCl (step 7f).

The obtained solution is put in a separating funnel and is extracted three times with 1.5 litres of ethylic ether (step 7g). Once the two phases have been separated, a slightly brown red coloured watery phase is obtained which may be sent to a suitable treatment plant (step 7h). The several ethereal phases obtained from the extraction processes and the last washing of the wood cross-bar are united (step 7i) and left evaporating (step 71) by means of a rotating evaporator, thereby recovering by this process the solvent (step 7m), which may be sent to a suitable treatment plant, and the residual of cresoline oil (step 7n) equal to 174 g.

The reduction of weight of the piece of wood cross-bar is equal to 190 g (2.57 Kg - 2.38 Kg = 0.19 Kg = 190 g).

The percent return of the cresoline oil recovery is 91.5% (174 g / 190 g / 100).

Finally, a selection is made of the decontaminated cross-bars, which are put in the market according to the several types of use (step 8 in Figure 1).

## Claims

1. Process for recycling used wood cross-bars for railways impregnated with contaminating material, comprising the fbllowing steps:
- collection and selection (1) between reusable material and material for discharge (3);
- selection (2) between directly reusable material (4) and material to be decontaminated;
- temporary stocking (5) of the material to be decontaminated;
- chemical analysis (6) of the material to be decontaminated;
- decontamination (7) by immersion in one or more decontamination tubs (7a, 7b) containing a saturated watery solution of NaOH;
- selection of decontaminated material and marketing thereof (8) for various types of use;
**characterized in that:**
- the decontamination step (7) comprises subsequent immersion of the material exiting from said decontamination tubs in a tub containing water (7c) and then in a further tub containing ethylic ether (7d) to obtain reusable decontaminated material (7e)

2. Process according to claim 1, **characterized in that** said contaminating material consists of cresoline oil comprising phenols and said decontamination step (7) includes a phenol recovery operation comprising:
- recovery of watery solution containing phenates from said decontamination tubs and said tub containing water;
- acidification (7f) of said watery solution containing phenates to obtain a mixture of phenols and a watery phase;
- extraction (7g) of said mixture of phenols by reaction with organic solvents such as ethylic ether or dichloromethane;
- mixing (7i) said mixture of phenols with ethylic ether recovered from said further tub;
- subjecting said mixture of phenols mixed with said recovered ethylic ether to vaporization(71) to recover by evaporation organic solvent and residuals of cresoline oil.

3. Process according to claim 2, **characterized in that** said solvent and residuals of cresoline oil are sent to a treatment plant (7n).

4. Process according to claim 2, **characterized in that** said watery phase is sent to a depuration plant for industrial water (7m)

## Patentansprüche

1. Verfahren zum Recycling von mit kontaminierendem Material imprägnierten, gebrauchten Holz-Eisenbahnschwellen, umfassend die folgenden Schritte:
- Sammeln und Wahl (1) zwischen wiederverwendbarem Material und Material zum Ausmustern (3);
- Wahl (2) zwischen direkt wiederverwendbarem Material (4) und zu dekontaminierendem Material;
- vorübergehende Lagerung (5) des zu dekontaminierenden Materials;
- chemische Analyse (6) des zu dekontaminierenden Materials;
- Dekontaminierung (7) durch Eintauchen in einen oder mehrere Dekontaminationsbottiche (7a, 7b), die eine gesättigte wässrige NaOH-Lösung enthalten;
- Auswahl des dekontaminierten Materials und dessen Vermarktung (8) für verschiedene Verwendungsarten;
**dadurch gekennzeichnet, dass**:
- der Dekontaminationsschritt (7) anschließendes Eintauchen des die Dekontaminationsbottiche verlassenden Materials in einen Wasser enthaltenden Bottich (7c) und dann in einen Ethylether (7d) enthaltenden weiteren Bottich umfasst, um wiederverwendbares dekontaminiertes Material (7e) zu erhalten.

2. Verfahren gemäß Anspruch 1, **dadurch gekennzeichnet, dass** das kontaminierende Material aus Phenole umfassendem Cresolöl besteht, und der Dekontaminationsschritt (7) einen Phenol-Rückgewinnungsbetrieb einschließt, umfassend:
- Rückgewinnung der Phenolate enthaltenden wässrigen Lösung aus den Dekontaminationsbottichen und den Wasser enthaltenden Bottichen;
- Ansäuern (7f) der Phenolate enthaltenden wässrigen Lösung, um ein Phenolgemisch und eine wässrige Phase zu erhalten;
- Extraktion (7g) des Phenolgemisches durch Umsetzung mit organischen Lösungsmitteln wie Ethylether oder Dichlormethan;
- Mischen (7i) des Phenolgemisches mit Ethylether, der aus dem weiteren Bottich wiedergewonnen wird;
- Unterziehen des mit dem wiedergewonnenen Ethylether gemischten Phenolgemisches einer Verdampfung (71), um durch Verdampfung organisches Lösungsmittel und Cresolölreste wiederzugewinnen.

3. Verfahren gemäß Anspruch 2, **dadurch gekennzeichnet, dass** das Lösemittel und die Cresolölreste zu einer Aufbereitungsanlage (7n) befördert werden.

4. Verfahren gemäß Anspruch 2, **dadurch gekennzeichnet, dass** die wässrige Phase zu einer Reinigungsanlage für Industriewasser (7m) befördert wird.

## Revendications

1. Procédé de recyclage de traverses de voies ferrées en bois usagées, imprégnées d'une matière contaminante, lequel procédé comporte les étapes suivantes :
- collecter le matériel et faire le tri (1) entre celui qui peut encore servir et celui qui est bon à mettre au rebut (3) ;
- faire le tri (2) entre le matériel qu'on peut remettre en service directement (4) et celui qu'il faut auparavant décontaminer;
- stocker temporairement (5) le matériel à décontaminer;
- soumettre le matériel à décontaminer à une analyse chimique (6);
- décontaminer (7) le matériel par immersion dans un ou plusieurs bains de décontamination (7a, 7b) contenant une solution aqueuse saturée de soude caustique (NaOH) ;
- et trier le matériel décontaminé et le commercialiser (8) pour divers usages ;
**caractérisé en ce que**:
- l'étape de décontamination (7) comporte le fait d'immerger le matériel qui sort des bains de décontamination dans une cuve (7c) contenant de l'eau, puis dans une autre cuve (7d) contenant de l'éther éthylique, pour obtenir un matériel décontaminé réutilisable (7e).

2. Procédé conforme à la revendication 1, **caractérisé en ce que** ladite matière contaminante est de l'huile de créosote, qui comprend des phénols, et ladite étape de décontamination (7) inclut une opération de récupération des phénols qui comporte :
- le fait de récupérer les solutions aqueuses contenant des phénates, provenant desdits bains de décontamination et de ladite cuve contenant de l'eau ;
- le fait d'acidifier (7f) cette solution aqueuse contenant des phénates, de manière à obtenir un mélange de phénols et une phase aqueuse ;
- le fait de soumettre ce mélange de phénols à une extraction (7g) opérée avec un solvant organique comme de l'éther éthylique ou du dichloro-méthane ;
- le fait de mélanger (7i) ce mélange de phénols avec l'éther éthylique récupéré, provenant de ladite autre cuve ;
- et le fait de soumettre à une vaporisation (71) ce mélange de phénols et d'éther éthylique récupéré, afin de récupérer par évaporation le solvant organique et des résidus d'huile de créosote.

3. Procédé conforme à la revendication 2, **caractérisé en ce que** ledit solvant et les résidus d'huile de créosote sont envoyés vers une installation de traitement (7n).

4. Procédé conforme à la revendication 2, **caractérisé en ce que** ladite phase aqueuse est envoyée vers une installation d'épuration d'eaux industrielles (7m).
